# EUROPEAN PATENT SPECIFICATION

(11) **EP 3 164 682 B1**
(45) Date of publication and mention of the grant of the patent: **25.05.2022**
(21) Application number: 15814401.4
(22) Date of filing: 06.07.2015
(51) Int. Cl.: G01F 23/263

(54) **CAPACITIVE LIQUID LEVEL MEASUREMENT WITH DIFFERENTIAL OUT-OF-PHASE CHANNEL DRIVE TO COUNTERACT HUMAN BODY CAPACITANCE**
KAPAZITIVE FLÜSSIGKEITSSTANDSMESSUNG MIT DIFFERENTIELLEM PHASENVERSCHOBENEM KANALANTRIEB GEGEN MENSCHLICHE KÖRPERKAPAZITÄT
MESURE DE NIVEAU DE LIQUIDE CAPACITIVE AVEC COMMANDE DE CANAL DIFFÉRENTIELLE DÉPHASÉE POUR COMPENSER LA CAPACITÉ DU CORPS HUMAIN

(30) Priority: 03.07.2014 US 201462020725 P; 02.07.2015 US 201514790355
(43) Date of publication of application: 10.05.2017
(73) Proprietor: Texas Instruments Incorporated, Dallas, TX 75265-5474 (US)
(72) Inventor: MIATTON, Daniele, I-27020 Carbonara al Ticino (IT); CANCLINI, Athos, I-22012 Cernobbio (IT); LIU, Dongtai, Fremont, CA 94539 (US); FOMIN, Evgeny, San Carlos, CA 94070 (US); REISTSMA, George, Redwood City, CA 94061 (US); TARELLI, Riccardo, I-23801 Calolziocorte (IT)
(74) Representative: Zeller, Andreas
(86) International application number: PCT/US2015/039248
(87) International publication number: WO 2016/004436

(56) References cited:
- EP-B1- 1 999 441
- DE-A1-102012 020 925
- RU-C- 1 793 249
- RU-U1- 80 561
- US-A1- 2004 011 128
- US-A1- 2009 158 841
- US-A1- 2012 055 181
- US-B1- 6 490 920
- US-B1- 6 564 630
- US-B2- 7 610 804

## Description

This relates generally to measuring liquid level in a container.

### BACKGROUND

Capacitive sensing technology has been adapted for sensing liquid levels. Capacitive sensing is contactless, and wear-free.

For liquid levels, a container assembly includes an external capacitive sensor (capacitor electrodes) dimensioned according to a predetermined liquid level range. Ignoring environmental factors, such as parasitic capacitances, measured capacitance increases linearly as liquid level increases. US 2009/158841 relates to a sensor for the contactless detection of the level of a liquid and adhering high-conductivity medium, especially blood, through a non-metal wall of a container and corresponding method. US 2004/011128 relates to a capacitive fill level measuring instrument. US 6,490,920 relates to a capacitive liquid level sensor. US 6,564,630 relates to a method for measuring a level and a level sensor.

### SUMMARY

In described examples, capacitive liquid level measurement with differential out-of-phase (OoP) channel drive can be adapted for use in a liquid container assembly in which a capacitive sensor disposed adjacent the container includes CHx and CHy symmetrical capacitor electrodes, each corresponding in height to a range of liquid level measurement. The OoP capacitive liquid level methodology includes: driving the CHx electrode with a CHx drive signal; driving the CHy electrode with a CHy drive signal that is substantially 180 degrees out-of-phase with the CHx drive signal; acquiring capacitance measurements through the CHx electrode (such as based on capacitive charge transfer); and converting the capacitance measurements to an analog voltage corresponding to the capacitance associated with the liquid level. The methodology can include converting the analog capacitance measurements to digital data corresponding to the capacitance associated with the liquid level.

### BRIEF DESCRIPTION OF THE DRAWINGS

FIGS 1A, 1B, 1C and 1D functionally illustrate capacitive liquid level measurement.
FIGS 2A, 2B and 2C functionally illustrate capacitive liquid level measurement where a human body presence is brought into proximity with the container/liquid, introducing parasitic capacitance.
FIGS 3A, 3B and 3C illustrate an example functional embodiment of capacitive liquid level measurement with differential out-of-phase (OoP) channel drive to counteract human body capacitance.

### DETAILED DESCRIPTION OF EXAMPLE EMBODIMENTS

Example embodiments and applications illustrate various features and advantages of capacitive liquid level measurement with differential out-of-phase (OoP) channel drive to counteract human body capacitance.

In brief overview, the disclosed system/methodology for capacitive liquid level measurement uses differential out-of-phase (OoP) channel drive to counteract human body capacitance. In an example embodiment, a container assembly includes a capacitive sensor with symmetrical CHx and CHy capacitor electrodes, corresponding in height to a liquid level measurement range. A CHx driver provides CHx excitation/drive to the CHx electrode, and a CHy driver provides OoP CHy excitation/drive to the CHy electrode that is substantially 180 degrees out-of-phase with the CHx drive. Capacitance associated with the liquid level is measured by acquiring capacitance measurements through the CHx channel (such as based on capacitive charge transfer), and converting the capacitance measurements to an analog voltage corresponding to liquid-level capacitance (which can then be converted to digital data representative of liquid level). The CHx/CHy capacitive sensor can be configured with SHLDx/SHLDy shields disposed behind, and driven in phase with, respective CHx/CHy electrodes. Example applications include appliances (refrigerators, coffee machines, humidifiers), and medical (auto-injectors, drug pens, insulin pumps).

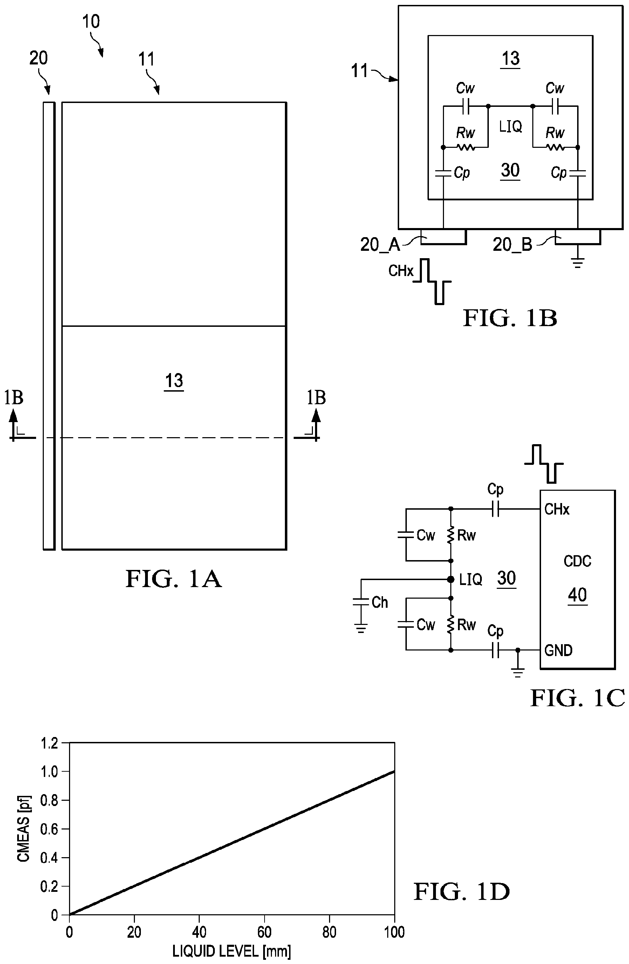

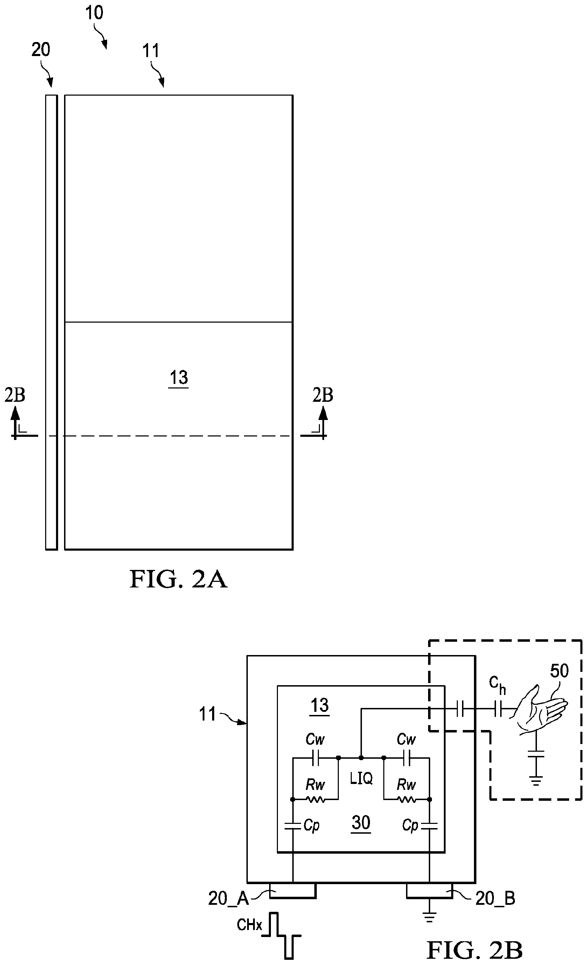

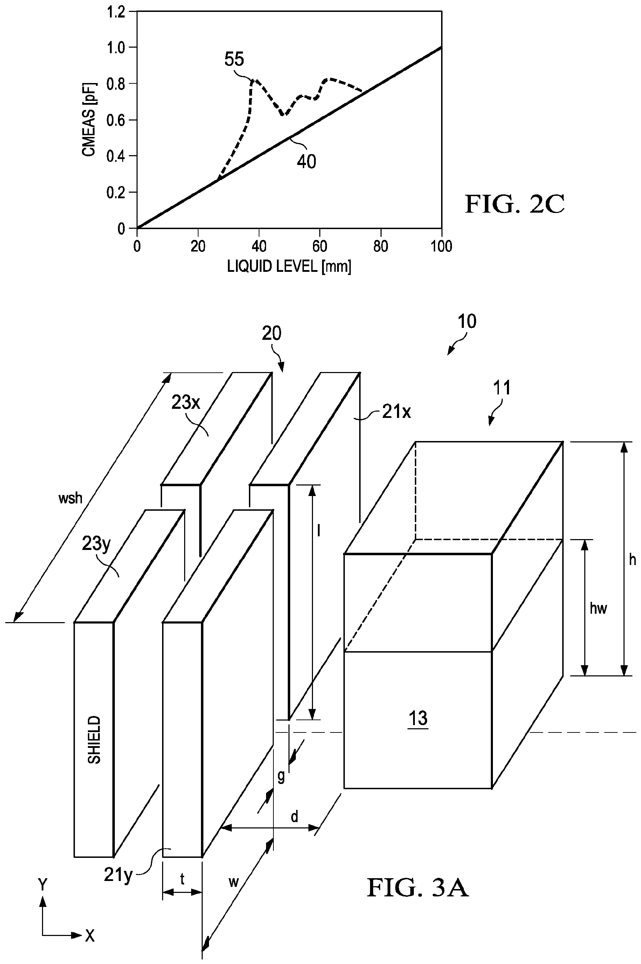

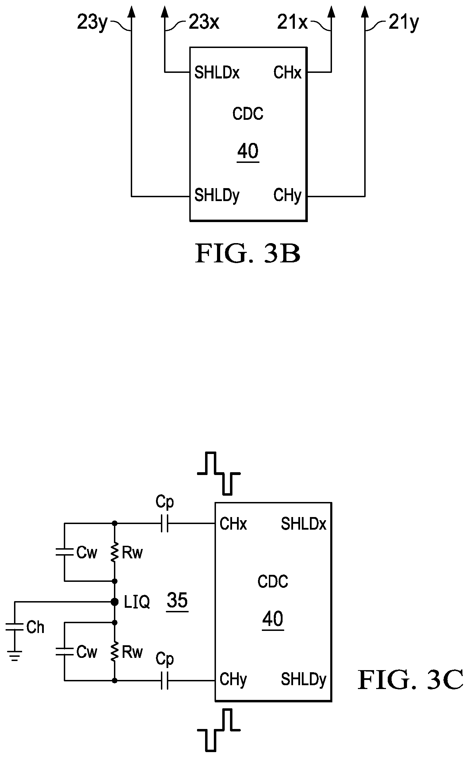

FIGS 1A, 1B, 1C and 1D functionally illustrate capacitive liquid level measurement in connection with a liquid container assembly 10, which includes a container 11 with a liquid 13, such as water. Such measurement is adapted to a liquid container assembly with CHx and GND capacitor electrodes 20_A and 20_B, and capacitance measurement electronics 40, and including a container/liquid electrical model (FIGS 2 and 3) with container capacitance Cp and liquid capacitance/resistance Cw/Rw.

A capacitive liquid level measurement system is represented by capacitive sensing electrodes 20 (FIG 1A), including (FIG 1B) symmetrical channel electrode (CHx) 20_A and ground electrode (GND) 20_B. Capacitive measurement electronics are represented by a capacitance-to-digital converter (CDC) 40. A container/liquid electrical model 30 includes a capacitance Cp of container 11 and capacitance/resistance Cw/Rw of liquid/water 13.

Capacitive sensing is based on successive excitation/drive and acquisition/read phases through CHx channel electrode 20_A. During acquisition/read phases, fringing capacitance is measured between the CHx channel electrode 20_A and GND electrode 20_B. In container/liquid electrical model 30, capacitance is measured relative to node LIQ.

Referring to FIG 1D, measured capacitance increases linearly as liquid level.

FIGS 2A, 2B and 2C functionally illustrate capacitive liquid level measurement for container system 10 where a human body presence, functionally represented by hand 50, is brought into proximity with liquid 13 in container 11. The human body presence introduces parasitic capacitances, represented in container/liquid electrical model 30 as capacitance Ch that couples into the capacitance measurement node LIQ.

FIG 2B illustrates the container/liquid electrical model (30) with human body capacitance Ch coupled into a capacitance measurement node (LIQ). FIG 2C illustrates an example capacitance measurement plot with the effect of human body capacitance on capacitance measurement illustrated as a parasitic disturbance 55 in the measured capacitance. Referring to FIG 2C, the potential difference caused by the parasitic human body capacitance Ch corresponds to a disturbance 55 in the measured capacitance, affecting the liquid level measurement.

FIGS 3A, 3B and 3C illustrates an example functional embodiment of capacitive liquid level measurement with differential out-of-phase (OoP) channel drive, effective to counteract human body capacitance. FIG 3A illustrates a liquid container system including CHx and CHy capacitor electrodes 21x and 21y. FIG 3C illustrates an example functional embodiment of OoP capacitive liquid level measurement, including capacitance-to-digital conversion (CDC) electronics 40 with differential CHx and OoP CHy sensor excitation/acquisition channels, coupled to the container/liquid electrical model 30 including human body capacitance Ch.

Referring to FIG 3A, a liquid container system 10 includes container 11 with liquid 13, such as water. A capacitive sensor assembly 20 is disposed adjacent container 11. Capacitive sensor assembly 20 includes symmetrical, separately driven CHx and OoP CHy capacitor electrodes 21x and 21y, each corresponding in height to a range of liquid level measurement.

The example capacitive sensor assembly 20 is configured with driven shields that focus the sensing direction toward the liquid target, and provide a backside barrier from interference that can affect capacitance measurements. SHLDx shield 23x is arranged behind the CHx electrode, and a SHLDy shield 23y is arranged behind the CHy electrode. SHLDx/SHLDy shields 23X/23y are driven in phase with respective CHx/CHy electrodes 21x/21y, i.e., with the same excitation/drive signal as the CHx/CHy electrodes. Because SHLDx/SHLDy are at substantially the same potential as the CHx/CHy electrodes, electric field is canceled on the shield side of capacitive sensor assembly 20, so that the active sensing e-field is in the direction of the liquid.

Referring to FIGS 3B and 3C, the liquid is represented by container/liquid electrical model 30, including container capacitance Cp and water capacitance/resistance Cw/Rw. Parasitic human body capacitance is represented by Ch coupled into capacitance measurement node LIQ.

For this example embodiment, capacitance measurement electronics are illustrated as a CDC 40, including sensor measurement channels CHx and CHy. The CHx channel is coupled to the CHx electrode 21x, and the CHy channel is coupled to the CHy electrode. Shield drive is through SHLDx/SHLDy shield driver outputs.

CDC 40 is configured to measure capacitance associated with the liquid level in the container, providing excitation/drive and acquisition/read phases. CDC 40 can be configured to implement capacitive sensing based on capacitive charge transfer -- in successive charge transfer phases (excitation/acquisition), charge is transferred from the CHx/CHy capacitor electrodes 21x/21y into CDC 40 (such as to a charge transfer capacitor), generating an analog voltage that corresponds to the measured capacitance associated with liquid level.

For differential OoP capacitive sensing according to aspects of this disclosure, CDC 40 drives CHx electrode 21x through the CHx channel with a CHx drive signal, and drives CHy electrode 21y through the CHy channel with a CHy drive signal that is substantially 180 degrees out-of-phase to the CHx drive signal.

CDC 40 acquires capacitance measurements through the CHx, which can be referenced to ground or another fixed voltage. In terms of the electrical model, capacitance is measured at the capacitance measurement node LIQ. Differential OoP sensor drive effectively fixes the voltage potential at the LIQ node, counteracting any human body parasitic capacitance.

Referring to FIG 3A, capacitance can be measured according to C_{MEAS} a h_{w}e_{w} + (h-h_{w})eₐ, where: h = container height; h_{w} = height of liquid; e_{w} = dielectric of liquid; and e = dielectric of air. a

CDC 40 also includes shield drivers, providing shield drive through the SHLDx/SHLDy outputs coupled respectively to SHLDx/SHLDy shields 23x23y. CDC 40 is configured to drive the SHLDx shield 23x with a SHLDx signal in phase with the CHx electrode channel drive, and to drive the SHLDy shield with a SHLDy signal in phase with the CHy electrode channel drive.

For the example embodiment, CDC 40 is configured to convert the analog capacitance measurements to digital data, corresponding to measured capacitance representing liquid level. To perform conversion, CDC 40 can be configured with an analog-to-digital converter such as a sigma delta converter. CDC 40 can also include digital filtering with digital data correction based on gain and/or offset calibrations.

For example, CDC 40 (capacitance measurement electronics) can be configured with an AFE (analog front end), and an ADC (analog-to-digital converter). The AFE can be configured to drive the CHx and CHy electrodes through the CHx and CHy channels, and acquire analog capacitance measurements through the CHx channel (such as based on capacitive charge transfer). The ADC can be configured to convert analog capacitance measurements to digital data corresponding to the capacitance associated with the liquid level.

As a design example, the following table provides example capacitive liquid level measurements for liquid levels L1 and L2=L1+3.5cm, each measured at four different human body (hand) positions relative to a container: (a) C0 -- no hand; (b) C2cm -- hand at 2cm from the container; (c) C1cm --hand at 1cm from the container; and (d) Chand -- hand in contact with container. As illustrated, differential OoP channel drive is substantially insensitive to the presence of human body capacitance.

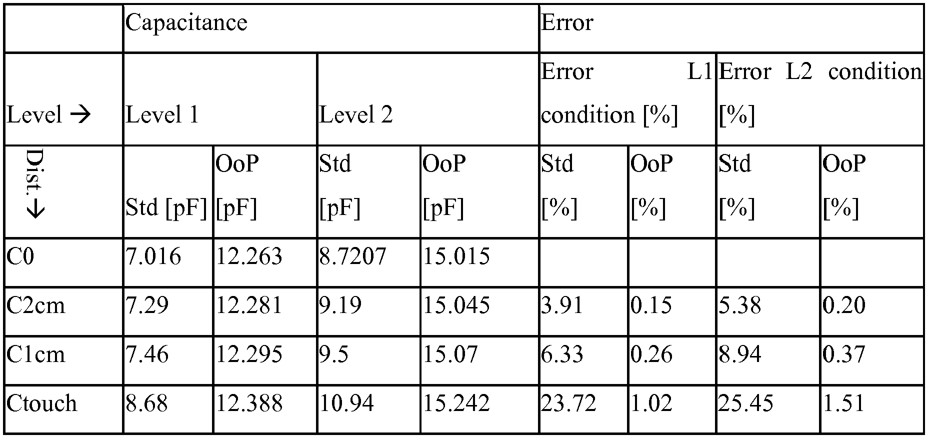

Example applications for differential OoP capacitive liquid level measurement according to this disclosure include: coffee machines (water level), and auto-injectors (drug level).

In summary, the disclosed system/methodology for capacitive liquid level measurement uses differential out-of-phase (OoP) channel drive to counteract human body capacitance. In example embodiments, a system suitable for capacitive liquid level measurement can include a capacitive sensor and capacitance measurement electronics. The capacitive sensor, disposed adjacent the container, can include symmetrical CHx and CHy capacitor electrodes, each corresponding in height to a range of liquid level measurement. The capacitance measurement electronics can include a CHx channel coupled to the CHx electrode, and a CHy channel coupled to the CHy electrode, and can be configured to measure capacitance associated with the liquid level of the liquid in the container, including: driving the CHx electrode through the CHx channel with a CHx drive signal; driving the CHy electrode through the CHy channel with a CHy drive signal that is substantially 180 degrees out-of-phase with the CHx drive signal; acquiring capacitance measurements through the CHx channel (such as referenced to ground); and converting the capacitance measurements to an analog voltage corresponding to the capacitance associated with the liquid level. The capacitance measurement electronics can be configured to acquire capacitance measurements based on capacitive charge transfer.

In other example embodiments, the capacitive sensor can include a SHLDx shield disposed behind the CHx electrode, and a SHLDy shield disposed behind the CHy electrode, and the capacitance measurement electronics can include a SHLDx driver coupled through a SHLDx output to the SHLDx shield, and a SHLDy driver coupled through a SHLDy output to the SHLDy shield, and can be further configured to drive the SHLDx shield with a SHLDx signal in phase with the CHx electrode channel drive, and drive the SHLDy shield with a SHLDy signal in phase with the CHy electrode. In other example embodiments, the capacitance measurement electronics can be configured as a capacitance-to-digital conversion (CDC) unit, including analog front end (AFE) circuitry, and analog-to-digital conversion (ADC) circuitry, where the AFE is configured to drive the CHx and CHy electrodes through the CHx and CHy channels, and acquire analog capacitance measurements through the CHx channel, and the ADC is configured to convert the capacitance measurements to digital data corresponding to the capacitance associated with the liquid level.

Modifications are possible in the described embodiments, and other embodiments are possible, within the scope of the claims.

## Claims

1. A circuit suitable for capacitive liquid level measurement of a liquid (13) in a container (11), the circuit adapted for use with a capacitive sensor (20) disposed adjacent the container (11), including first and second symmetrical capacitor electrodes (21x, 21y), each corresponding in height to a range of liquid level measurement, the circuit comprising:
a first drive circuitry coupled to the first electrode (21x), and configured to drive the first electrode (21x) through a first channel with a first drive signal;
a second drive circuitry coupled to the second electrode (21y), and configured to drive the second electrode (21y) through the second channel with a second drive signal that is substantially 180 degrees out-of-phase with the first drive signal; and
capacitance measurement circuitry configured to measure capacitance associated with the liquid level of the liquid (13) in the container (11), including: acquiring capacitance measurements through the first channel; and converting the capacitance measurements to an analog voltage corresponding to the capacitance associated with the liquid level.

2. A system suitable for capacitive liquid level measurement, comprising
a container (11) containing a liquid (13) at a liquid level; and
a circuit according to claim 1.

3. The circuit of claim 1 or the system of claim 2, wherein the capacitance measurement acquired through the first channel is referenced to ground.

4. The circuit of claim 1 or the system of claim 2, wherein:
the capacitive sensor (20) further includes a first shield (23x) disposed behind the first electrode (21x), and a second shield (23y) disposed behind the second electrode (21y);
the capacitance measurement electronics further includes a first driver coupled through a first output to the first shield (23x), and a second driver coupled through a second output to the second shield (23y); and
the capacitance measurement electronics are further configured to: drive the first shield (23x) with a first signal in phase with the first electrode (21x), and drive the second shield (23y) with a second signal in phase with the second electrode (21y).

5. The circuit of claim 1 or the system of claim 2, wherein the capacitance measurement electronics include a capacitance-to-digital conversion CDC unit (40), including:
analog front end circuitry configured to: drive the first and second electrodes (21x, 21y) through the first and second channels; and acquire analog capacitance measurements through the first channel; and
analog-to-digital conversion circuitry configured to convert the capacitance measurements to digital data corresponding to the capacitance associated with the liquid level.

6. The circuit or system of claim 5, wherein the capacitance measurements are acquired based on capacitive charge transfer.

7. The circuit of claim 1 or the system of claim 2, wherein the liquid (13) in the container (11) can be one of: water such as in a coffee machine, and drug level such as in an auto-injector.

8. A method suitable for capacitive liquid level measurement of a liquid (13) in a container (11), the method adapted for use with a capacitive sensor (20) disposed adjacent the container (11), including first and second symmetrical capacitor electrodes (21x, 21y), each corresponding in height to a range of liquid level measurement, the method comprising:
driving the first electrode (21x) with a first drive signal;
driving the second electrode (21y) with a second drive signal that is substantially 180 degrees out-of-phase with the first drive signal;
acquiring capacitance measurements through the first electrode (21x); and
converting the capacitance measurements to an analog voltage corresponding to the capacitance associated with the liquid level.

9. The method of claim 8, wherein the capacitance measurement acquired through the first electrode (21x) is referenced to ground.

10. The method of claim 8, wherein the capacitive sensor (20) includes a first shield (23x) disposed behind the first electrode (21x), and a second shield (23y) disposed behind the second electrode (21y), further comprising:
driving the first shield (23x) with a first signal in phase with the first electrode (21x); and
driving the second shield (23y) with a second signal in phase with the second electrode (21y).

11. The method of claim 8, implemented with a capacitance-to-digital conversion CDC unit (40), including
analog front end circuitry configured to: drive the first and second electrodes (21x, 21y) through the first and second channels; and acquire analog capacitance measurements through the first channel; and
analog-to-digital conversion circuitry configured to convert the capacitance measurements to digital data corresponding to the capacitance associated with the liquid level.

12. The method of claim 8, wherein capacitance measurements are acquired based on capacitive charge transfer.

13. The method of claim 8, wherein the liquid (13) in the container (11) can be one of: water such as in a coffee machine, and drug level such as in an auto-injector.

## Patentansprüche

1. Schaltung, die zur kapazitiven Flüssigkeitspegelmessung einer Flüssigkeit (13) in einem Behälter (11) geeignet ist, wobei die Schaltung zur Verwendung mit einem kapazitiven Sensor (20) ausgelegt ist, der neben dem Behälter (11) angeordnet ist und erste und zweite symmetrische Kondensatorelektroden (21x, 21y) aufweist, die jeweils in der Höhe einem Bereich der Flüssigkeitspegelmessung entsprechen, wobei die Schaltung umfasst:
eine erste Ansteuerschaltungsanordnung, die mit der ersten Elektrode (21x) gekoppelt und dafür ausgelegt ist, die erste Elektrode (21x) über einen ersten Kanal mit einem ersten Ansteuersignal anzusteuern;
eine zweite Ansteuerschaltungsanordnung, die mit der zweiten Elektrode (21y) gekoppelt und dafür ausgelegt ist, die zweite Elektrode (21y) über den zweiten Kanal mit einem zweiten Ansteuersignal anzusteuern, das im Wesentlichen um 180 Grad phasenverschoben zum ersten Ansteuersignal ist; und
Schaltungsanordnung zur Kapazitätsmessung, die dafür ausgelegt ist, die mit dem Flüssigkeitspegel der Flüssigkeit (13) im Behälter (11) verknüpfte Kapazität zu messen, einschließlich: Erfassen von Kapazitätsmessungen über den ersten Kanal; und
Umwandeln der Kapazitätsmessungen in eine analoge Spannung, die der mit dem Flüssigkeitspegel verknüpfen Kapazität entspricht.

2. System, das zur kapazitiven Flüssigkeitspegelmessung geeignet ist, umfassend
einen Behälter (11), der eine Flüssigkeit (13) bei einem Flüssigkeitspegel enthält; und
eine Schaltung gemäß Anspruch 1.

3. Schaltung nach Anspruch 1 oder System nach Anspruch 2, wobei die über den ersten Kanal erfasste Kapazitätsmessung auf Masse bezogen ist.

4. Schaltung nach Anspruch 1 oder System nach Anspruch 2, wobei:
der kapazitive Sensor (20) ferner eine erste Abschirmung (23x), die hinter der ersten Elektrode (21x) angeordnet ist, und eine zweite Abschirmung (23y), die hinter der zweiten Elektrode (21y) angeordnet ist, aufweist;
die Kapazitätsmesselektronik ferner einen ersten Treiber, der über einen ersten Ausgang mit der ersten Abschirmung (23x) gekoppelt ist, und einen zweiten Treiber, der über einen zweiten Ausgang mit der zweiten Abschirmung (23y) gekoppelt ist, aufweist; und
die Kapazitätsmesselektronik ferner ausgelegt ist zum:
Ansteuern der ersten Abschirmung (23x) mit einem ersten Signal in Phase mit der ersten Elektrode (21x) und Ansteuern der zweiten Abschirmung (23y) mit einem zweiten Signal in Phase mit der zweiten Elektrode (21y).

5. Schaltung nach Anspruch 1 oder System nach Anspruch 2, wobei die Kapazitätsmesselektronik eine Kapazität-zu-Digital-Wandler (CDC, Capacitance-to-Digital Conversion) -Einheit (40) aufweist, aufweisend:
eine analoge Frontend-Schaltungsanordnung, die ausgelegt ist zum: Ansteuern der ersten und der zweiten Elektrode (21x, 21y) über den ersten und den zweiten Kanal; und Erfassen von analogen Kapazitätsmessungen über den ersten Kanal; und
eine analog-zu-digital-Wandlerschaltungsanordnung, die dafür ausgelegt ist, die Kapazitätsmessungen in digitale Daten umzuwandeln, die der mit dem Flüssigkeitspegel verknüpften Kapazität entsprechen.

6. Schaltung oder System nach Anspruch 5, wobei die Kapazitätsmessungen basierend auf kapazitivem Ladungstransfer erfasst werden.

7. Schaltung nach Anspruch 1 oder System nach Anspruch 2, wobei die Flüssigkeit (13) im Behälter (11) eines der folgenden sein kann: Wasser, beispielsweise etwa in einer Kaffeemaschine, und ein Füllstand eines Medikaments, beispielsweise etwa in einer automatischen Injektionsvorrichtung.

8. Verfahren, das zur kapazitiven Flüssigkeitspegelmessung einer Flüssigkeit (13) in einem Behälter (11) geeignet ist, wobei das Verfahren zur Verwendung mit einem kapazitiven Sensor (20) ausgelegt ist, der neben dem Behälter (11) angeordnet ist und erste und zweite symmetrische Kondensatorelektroden (21x, 21y) aufweist, die jeweils in der Höhe einem Bereich der Flüssigkeitspegelmessung entsprechen, wobei das Verfahren umfasst:
Ansteuern der ersten Elektrode (21x) mit einem ersten Ansteuersignal;
Ansteuern der zweiten Elektrode (21y) mit einem zweiten Ansteuersignal, das im Wesentlichen um 180 Grad phasenverschoben zum ersten Ansteuersignal ist;
Erfassen von Kapazitätsmessungen über die erste Elektrode (21x); und
Umwandeln der Kapazitätsmessungen in eine analoge Spannung, die der mit dem Flüssigkeitspegel verknüpfen Kapazität entspricht.

9. Verfahren nach Anspruch 8, wobei die über die erste Elektrode (21x) erfasste Kapazitätsmessung auf Masse bezogen ist.

10. Verfahren nach Anspruch 8, wobei der kapazitive Sensor (20) ferner eine erste Abschirmung (23x), die hinter der ersten Elektrode (21x) angeordnet ist, und eine zweite Abschirmung (23y), die hinter der zweiten Elektrode (21y) angeordnet ist, aufweist, ferner umfassend:
Ansteuern der ersten Abschirmung (23x) mit einem ersten Signal in Phase mit der ersten Elektrode (21x); und
Ansteuern der zweiten Abschirmung (23y) mit einem zweiten Signal in Phase mit der zweiten Elektrode (21y).

11. Verfahren nach Anspruch 8, das mit einer Kapazität-zu-Digital-Wandler (CDC, Capacitance-to-Digital Conversion) -Einheit (40) implementiert ist, aufweisend
eine analoge Frontend-Schaltungsanordnung, die ausgelegt ist zum: Ansteuern der ersten und der zweiten Elektrode (21x, 21y) über den ersten und den zweiten Kanal; und Erfassen von analogen Kapazitätsmessungen über den ersten Kanal; und
eine analog-zu-digital-Wandlerschaltungsanordnung, die dafür ausgelegt ist, die Kapazitätsmessungen in digitale Daten umzuwandeln, die der mit dem Flüssigkeitspegel verknüpften Kapazität entsprechen.

12. Verfahren nach Anspruch 8, wobei Kapazitätsmessungen basierend auf kapazitivem Ladungstransfer erfasst werden.

13. Verfahren nach Anspruch 8, wobei die Flüssigkeit (13) im Behälter (11) eines der folgenden sein kann: Wasser, beispielsweise etwa in einer Kaffeemaschine, und ein Füllstand eines Medikaments, beispielsweise etwa in einer automatischen Injektionsvorrichtung.

## Revendications

1. Circuit approprié pour la mesure capacitive du niveau d'un liquide (13) dans un récipient (11), le circuit étant adapté pour être utilisé avec un capteur capacitif (20) disposé de manière adjacente au récipient (11), comprenant des première et seconde électrodes de condensateur symétriques (21x, 21y) ; chacune correspondant en hauteur à une plage de mesure du niveau du liquide, le circuit comprenant :
un premier circuit de commande couplé à la première électrode (21x), et configuré pour commander la première électrode (21x) au moyen d'un premier canal avec un premier signal de commande ;
un second circuit de commande couplé à la seconde électrode (21y), et configuré pour commander la seconde électrode (21y) au moyen du second canal avec un second signal de commande qui est sensiblement déphasé de 130 degrés par rapport au premier signal de commande ; et
un circuit de mesure de capacité configuré pour mesurer la capacité associée au niveau de liquide du liquide (13) dans le récipient (11), comprenant :
l'acquisition de mesures de capacité au moyen du premier canal ; et la conversion des mesures de capacité en une tension analogique correspondant à la capacité associée au niveau de liquide.

2. Système adapté à la mesure capacitive du niveau d'un liquide, comprenant :
un récipient (11) contenant un liquide (13) à un niveau de liquide ; et
un circuit selon la revendication 1.

3. Circuit selon la revendication 1 ou système selon la revendication 2, la mesure de capacité acquise au moyen du premier canal étant référencée à la masse.

4. Circuit selon la revendication 1 ou système selon la revendication 2,
le capteur capacitif (20) comprenant en outre un premier élément de protection (23x) disposé derrière la première électrode (21x) ; et un second élément de protection (23y) disposé derrière la seconde électrode (21y) ;
l'électronique de mesure de capacité comprenant en outre un premier élément de commande couplé au moyen d'une première sortie au premier élément de protection (23x), et un second élément de commande couplé au moyen d'une seconde sortie au second élément de protection (23y) ; et
l'électronique de mesure de capacité étant en outre configurée pour :
commander le premier élément de protection (23x) avec un premier signal en phase avec la première électrode (21x), et commander le second élément de protection (23y) avec un second signal en phase avec la seconde électrode (21y).

5. Circuit selon la revendication 1 ou système selon la revendication 2, l'électronique de mesure de la capacité comprenant une unité de conversion de capacité en numérique CDC (40), comprenant :
un circuit frontal analogique configuré pour : commander les première et seconde électrodes (21x, 21y) au moyen des premier et second canaux ; et acquérir des mesures de capacité analogiques au moyen du premier canal ; et
un circuit de conversion analogique-numérique configuré pour convertir la capacité en données numériques correspondant à la capacité associée au niveau de liquide.

6. Circuit ou système selon la revendication 5, les mesures de capacité étant acquises sur la base d'un transfert de charge capacitif.

7. Circuit selon la revendication 1 ou système selon la revendication 2, le liquide (13) dans le récipient (11) pouvant être l'un parmi : de l'eau telle que dans une machine à café et un niveau de médicament tel que dans un auto-injecteur.

8. Procédé adapté à la mesure capacitive du niveau d'un liquide (13) dans un récipient (11), le procédé étant adapté à une utilisation avec un capteur capacitif (20) disposé de manière adjacente au récipient (11), comprenant des première et seconde électrodes de condensateur symétriques (21x, 21y), chacune correspondant en hauteur à une plage de mesure du niveau de liquide, le procédé comprenant :
la commande de la première électrode (21x) avec un premier signal de commande ;
la commande de la seconde électrode (21y) avec un second signal de commande qui est sensiblement déphasé de 180 degrés par rapport au premier signal de commande ;
l'acquisition de mesures de capacité au moyen de la première électrode (21x) ; et
la conversion des mesures de capacité en une tension analogique correspondant à la capacité associée au niveau de liquide.

9. Procédé selon la revendication 8, la mesure de capacité acquise au moyen de la première électrode (21x) étant référencée à la masse.

10. Procédé selon la revendication 8, le capteur capacitif (20) comprenant un premier élément de protection (23x) disposé derrière la première électrode (21x) et un second élément de protection (23y) disposé derrière la seconde électrode (21y), comprenant en outre :
la commande du premier élément de protection (23x) avec un premier signal en phase avec la première électrode (21x) ; et
la commande du second élément de protection (23y) avec un second signal en phase avec la seconde électrode (21y).

11. Procédé selon la revendication 8, mis en œuvre avec une unité de conversion de capacité en numérique CDC (40), comprenant :
un circuit frontal analogique configuré pour : commander les première et seconde électrodes (21x, 21y) au moyen des premier et second canaux ; et acquérir des mesures de capacité analogique au moyen du premier canal ; et
un circuit de conversion analogique-numérique configuré pour convertir les mesures de capacité en données numériques correspondant à la capacité associée au niveau de liquide.

12. Procédé selon la revendication 8, les mesures de capacité étant acquises sur la base d'un transfert de charge capacitif.

13. Procédé selon la revendication 8, le liquide (13) dans le récipient (11) pouvant être l'un parmi : de l'eau telle que dans une machine à café et un niveau de médicament tel que dans un auto-injecteur.
